# EUROPÄISCHE PATENTANMELDUNG

(11) **EP 1 523 913 A2**
(43) Veröffentlichungstag der Anmeldung: **20.04.2005**
(21) Anmeldenummer: 04023429.6
(22) Anmeldetag: 01.10.2004
(51) Int. Cl.: A47J 31/00

(54) **Verfahren zum Zubereiten sowie Bereitstellen von flüssigen Lebensmitteln, insbesondere Kaffee, Tee, Suppe od. dgl. in einem Fahrzeug, insbesondere PKW**

(30) Priorität: 07.10.2003 DE 10347047
(71) Anmelder: Steigerwald, Lothar, 63743 Aschaffenburg (DE); Freund, Wolfgang, 63867 Johannesberg (DE)
(72) Erfinder: Steigerwald, Lothar, 63743 Aschaffenburg (DE); Freund, Wolfgang, 63867 Johannesberg (DE)
(74) Vertreter: Weiss, Peter, Dr.

(57) **Zusammenfassung**

Bei einem Verfahren zum Zubereiten sowie Bereitstellen von flüssigen Lebensmitteln, insbesondere Kaffee, Tee, Suppe oder dergleichen in einem Fahrzeug (1), insbesondere PKW mit einer Vorrichtung (R) in welcher Wasser bereitgestellt wird, soll die Vorrichtung (R) zum Zubereiten sowie Bereitstellen von flüssigen Lebensmittel im Bereich des Fahrgastraumes (2) angeordnet sein, und über einen externen Wasserbehälter (5) sowie externe Steuerung (11), heisses und erwärmtes Wasser der Vorrichtung (R) zugeführt werden.

## Beschreibung

Die vorliegende Erfindung betrifft ein Verfahren zum Zubereiten sowie Bereitstellen von flüssigen Lebensmitteln, insbesondere Kaffee, Tee, Suppe oder dergleichen in einem Fahrzeug, insbesondere PKW mit einer Vorrichtung in welcher Wasser bereitgestellt wird sowie eine Vorrichtung zum Durchführen des Verfahrens.

Derartige Vorrichtungen sind in vielfältigster Form und Ausführung bekannt und gebräuchlich. Beispielsweise können mittels 12V Adapterstecker kleine mobile Kaffeemaschinen in Fahrzeuginnenräumen eines Fahrzeuges betrieben werden.

Nachteilig hierbei ist, dass in diesen Vorrichtungen das Wasser separat erhitzt werden muss, diese schlecht zu reinigen sind und diese sich nicht auch während der Fahrt leicht betreiben lassen.

Der vorliegenden Erfindung liegt daher die Aufgabe zugrunde ein Verfahren sowie ein Vorrichtung der eingangs genannten Art zu schaffen, mit welchen die vorgenannten Nachteile beseitigt werden, und welche auf kostengünstige Weise sehr einfach zu betreiben ist. Ferner sollen Bauteile einzeln sehr leicht zur Wartung, Reparatur oder Modernisierung ausgetauscht werden können.

Zur Lösung dieser Aufgabe führen die Merkmale des Patentanspruches 1 sowie die der nebengeordneten Patentansprüche.

Bei der vorliegenden Erfindung hat sich als besonders vorteilhaft erwiesen, ein Verfahren sowie eine Vorrichtung zum Zubereiten sowie Bereitstellen von flüssigen Lebensmitteln zu schaffen, welche in einer sog. Modulbauweise hergestellt ist. Dabei soll in der Vorrichtung, welcher nach Bereitstellung von heissem Wasser über eine externe Zuleitung, das flüssige Nahrungsmittel zubereitet werden.

Diese Vorrichtung ist vorzugsweise lediglich im Fahrgastinnenraum angeordnet. Bevorzugt ist die Vorrichtung im Bereich einer Konsole zwischen Fahrersitz und Beifahrersitz wiederlösbar festgelegt und wird extern über eine Zuleitung und über eine Rücklaufleitung mit heissem Wasser versorgt.

Der hierzu erforderliche Wasserbehälter, sowie die hierzu erforderliche Steuerung, die Pumpe sowie die Heizeinrichtung, die erforderlich sind, um das heisse Wasser aufzubereiten und zirkulierend heiss zur Verfügung zu stellen, sitzen beispielsweise zusammengefasst zu einem Modul oder zu mehreren einzelnen Modulen ausserhalb des Fahrgastinnenraumes, beispielsweise in einem Kofferraum, einem Motorraum, einem Radhaus eines Kotflügels oder dgl. eines PKW's. Auf diese Weise ist gewährleistet, dass lediglich die Vorrichtung, welche ein Schieber aufweist, der der Aufnahme zum Einlegen von Tabs, Kaffee-Tabs, Tee-Tabs etc. bildet, mit heissem Wasser durchströmt wird, um beispielsweise eine Tasse Kaffee oder einen Tee herzustellen.

Auf diese Weise lässt sich eine Apparativ äusserst kleine Vorrichtung in einem Fahrgastinnenraum beispielsweise nahe der Konsole anordnen, ohne das diese wesentlich den Betrieb des Fahrzeuges stört oder beeinträchtigt.

Insbesondere ist eine derartige Vorrichtung sowie ein derartiges Verfahren für Taxifahrer geeignet, die dem Passagier oder Fahrgast ein frisches Getränk wie beispielsweise einen Kaffee oder einen Tee ggf. auch eine Suppe oder dgl. zubereiten können.

Hierzu hat sich als besonders vorteilhaft erwiesen, dass sämtliche hierzu erforderlichen Bauteile wie Wasserbehälter, Heizeinrichtung, Pumpe und Steuerung ausserhalb des Fahrgastinnenraumes, untergebracht und angeordnet sind. Die Modulbauweise gewährleistet ferner, dass einzelne Bauteile, wie bspw. der Wasserbehälter sehr leicht zum Nachfüllen, Reinigen oder Austauschen entnehmbar sind. Auch können entsprechende modernere, weiterentwickelte Vorrichtungen sehr leicht an herkömmliche Steuerungen, Wasserbehälter etc. angeschlossen werden oder ausgetauscht werden. Dies soll ebenfalls im Rahmen der vorliegenden Erfindung liegen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Draufsicht auf eine erfindungsgemässe Anordnung einer Vorrichtung zum Bereitstellen von flüssigen Lebensmittel in einem Fahrzeug;
Figur 2 eine schematisch dargestellte Draufsicht auf ein weiteres Ausführungsbeispiel einer weiteren Anordnung zum Zubereiten von flüssigen Lebensmitteln in einem Fahrzeug;
Figur 3a eine schematisch dargestellte zumindest teilweise längsaufgeschnittene Seitenansicht auf eine erfindungsgemässe Vorrichtung zum Zubereiten sowie Bereitstellen von flüssigen Lebensmitteln, insbesondere Kaffee, Tee oder Suppe in einem Fahrzeug 1 in einer Gebrauchslage;
Figur 3b eine schematisch dargestellte Seitenansicht, in zumindest teilweiser längsquerschnittlicher Darstellung gemäss Figur 3a in einer weiteren Gebrauchslage.

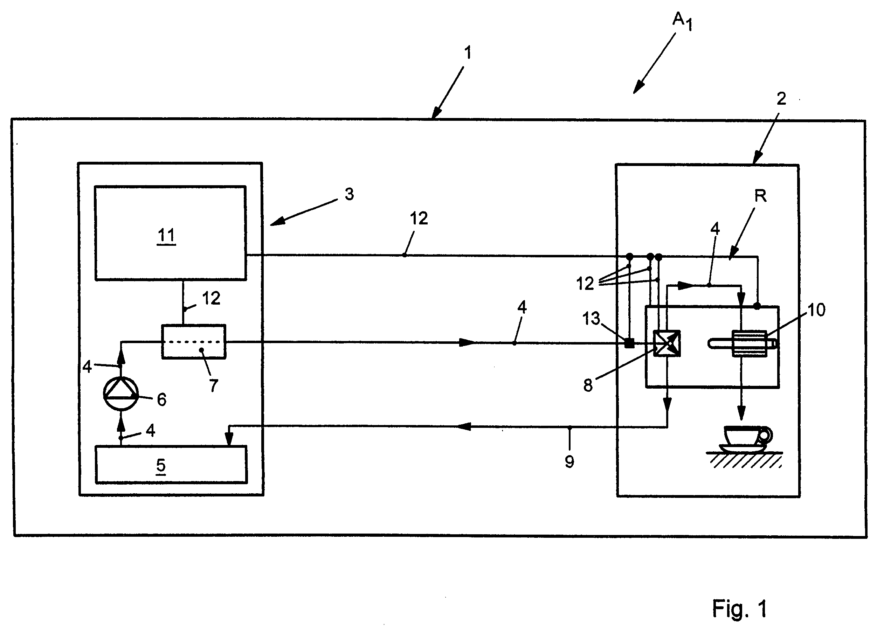

Gemäss Figur 1 ist in einer entsprechenden Anordnung A₁ ein Fahrzeug 1 aufgezeigt, welches einen hier nur angedeuteten Fahrgastinnenraum 2 definiert, und einen ausserhalb des Fahrgastinnenraum liegenden Bereiches 3 aufweist.

Der Bereich 3 kann beispielsweise ein Kofferraum eines PKW's od. dgl. sein.

Jedoch ist auch denkbar, dass der Bereich 3, beispielsweise den Bereich eines Motorraumes, eines Kotflügelbereiches innerhalb des Kofferraumes od. dgl. bildet.

Die Vorrichtung R zum Zubereiten sowie zum Bereitstellen von flüssigen Lebensmitteln, wie vorzugsweise Kaffee, Tee oder auch Suppen oder andere flüssige Lebensmittel, wie beispielsweise Kakao-Getränken ist vorzugsweise im Fahrgastinnenraum 2 im Bereich der Konsole zwischen Fahrersitz und Beifahrersitz, hier nicht näher beziffert, angeordnet.

Über eine Zuleitung 4 wird aus einem Wasserbehälter 5 und dazwischen eingesetzter Pumpe 6 und Heizeinrichtung 7 das aus dem Wasserbehälter 5 zur Verfügung gestellte Wasser erhitzt und der Vorrichtung R zugeführt. Innerhalb der Vorrichtung R ist ein Ventil, vorzugsweise ein Mehrwegeventil 8 vorgesehen, an welches eine Rücklaufleitung 9, die in den externen Wasserbehälter 5 einmündet, führt. Ferner schliesst eine weitere Zuleitung 4 an das Mehrwegeventil an, welche das auf eine Betriebstemperatur erwärmte Wasser zur Zubereitung bzw. zum Bereitstellen von flüssigen Lebensmittel bei einer Wasserzufuhr 10 zuführt. Über die Rücklaufleitung 9 ist bei entsprechender Stellung des Mehrwegeventils 8 eine Zirkulation des Wassers im Kreislauf bestehend aus Behälter 5, Pumpe 6, Heizeinrichtung 7, und Zulaufleitung 4 möglich. Eine entsprechende Steuerung 11 übernimmt die entsprechende Ansteuerung der Heizeinrichtung 7 sowie die Pumpe 6 über eine hier angedeutete Busleitungen 12. Dabei ist die Steuerung 11 über zumindest eine Busleitung 12 mit der Vorrichtung R und dem Mehrwegeventil 8 verbunden.

Auch soll im Rahmen der vorliegenden Erfindung liegen, dass die Zuleitung vorzugsweise nahe des Mehrwegeventils ein Temperatursensor 13 eingesetzt ist, um die Wassertemperatur vorzugsweise unmittelbar vor dem Mehrwegeventil zu bestimmen, und während eines Kreislaufes zu regeln.

Ist die Wassertemperatur nicht auf einer gewählten und wählbaren Betriebstemperatur, so zirkuliert das Wasser so lange zwischen Vorrichtung R bzw. Mehrwegeventil 8, Rücklaufleitung 9, Wasserbehälter 5, Pumpe 6 und Heizeinrichtung 7, bis die Betriebstemperatur und/oder Betriebsdruck erreicht ist. Erst dann wird das Mehrwegeventil 8 geöffnet und eine weitere Zuleitung 4 zum Zubereiten bzw. Bereitstellen von flüssigen Lebensmittel in der Vorrichtung R geöffnet.

Wichtig ist bei der vorliegenden Erfindung, dass lediglich die Vorrichtung R, zum Bereitstellen bzw. Zubereiten von flüssigen Lebensmittel, die im folgenden näher beschrieben wird, im Bereich des Fahrgastinnenraumes 2 vorgesehen ist. Diese kann hierdurch äusserst platzsparend, und einfach zu bedienen im Fahrgastraum vorzugsweise im Bereich der Konsole zwischen Fahrersitz und Beifahrersitz angeordnet werden. Lediglich die Busleitung 12 bzw. Zuleitung 4 und Rücklaufleitung 9 führen zu den jeweiligen einzelnen Modulen, wie die Steuerung 11, Wasserbehälter 5, Pumpe 6 und Heizeinrichtung 7, die als einzelnes Modul oder jeweils getrennte separate Module ausserhalb des Fahrgastinnenraumes 2 im Fahrzeug 1 angeordnet sein können. Vorzugsweise sind diese einzelnen Bauteile im Kofferraum eines Fahrzeuges 1 untergebracht und können bei Bedarf, entweder zur Überholung, Wartung oder bei Defekt sehr leicht ausgetauscht werden.

Hierdurch wird eine Vorrichtung R realisierbar, die auf kleinstem Raum, im Fahrgastraum unterzubringen und zu bedienen ist.

Dies ist von wesentlichem Vorteil bei der vorliegenden Erfindung.

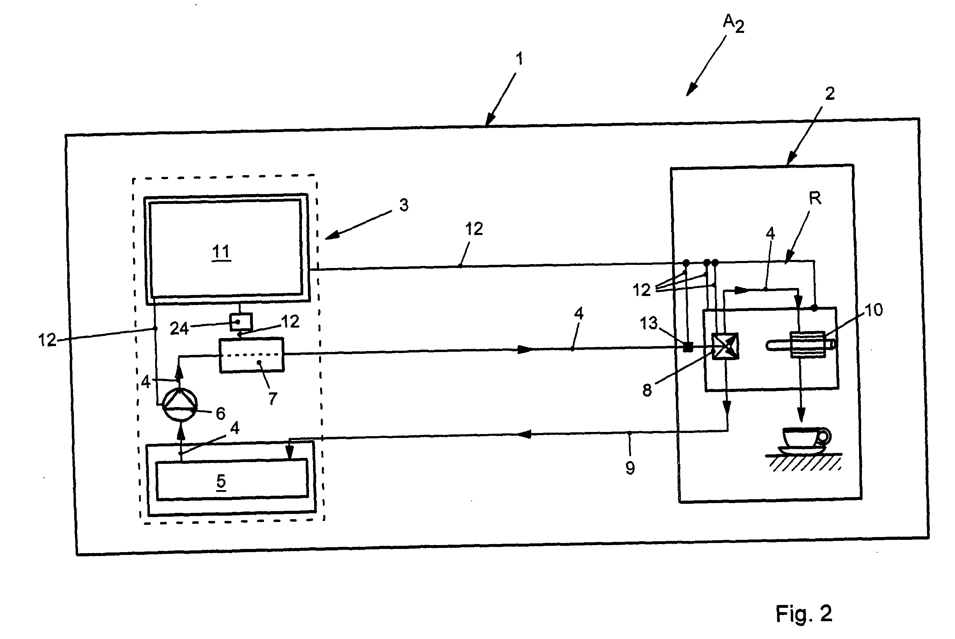

In dem Ausführungsbeispiel der vorliegenden Erfindung gemäss Figur 2 ist lediglich bei einer Anordnung A₂ unterschiedlich, dass zur Speisung der Heizeinrichtung 7 ein Wechselrichter 24 angesteuert über die Steuerung 11 dazwischen geschaltet sein kann, der beispielsweise die im Fahrzeug übliche Netzspannung von 12V oder 24V auf eine erforderliche Spannung der Heizeinrichtung 7 transformiert.

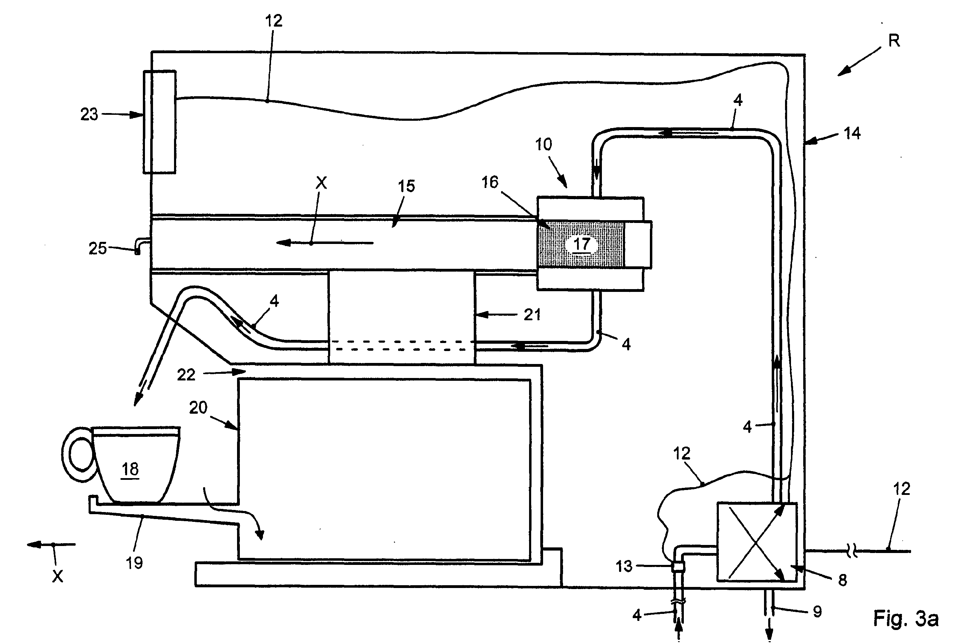

Im Ausführungsbeispiel der vorliegenden Erfindung gemäss Figur 3a ist die Vorrichtung R, welche schematisch in den Figuren 1 und 2 enthalten ist, näher beschrieben.

Dort besteht die Vorrichtung R aus einem Gehäuse 14, welches hier nicht näher dargestellt, beispielsweise im Bereich einer Konsole zwischen Fahrersitz und Beifahrersitz im Fahrgastinnenraum 2 eines Fahrzeuges lösbar festgelegt ist.

In dem Gehäuse 14 ist das Mehrwegeventil 8, an welches Zulaufleitung 4 mit integriertem Temperatursensor 13 und Rücklaufleitung 9 anschliessen, enthalten.

Über die Zulaufleitung 4, die vom Mehrwegeventil 8 der Wasserzufuhr 10 einmündet, wird heisses Wasser in flüssigem und/oder dampfförmigen Zustand bereitgestellt.

Über ein in das Gehäuse 14 einschiebbares Schieberelement 15 mit einer Aufnahme 16 für beliebige Tabs 17 lässt sich im Bereich der Wasserzufuhr 10 der Tabs 17 von Wasser oder Wasserdampf durchströmen, um beispielsweise Kaffee oder Tee über eine weitere Zuleitung 4 an einer Tasse 18 als Kaffee, Tee oder Suppe bereitzustellen. Die Tasse 18, Behälter, Pappbecher, Plastikbecher oder dgl. steht auf oder hängt wiederlösbar bzw. wieder entnehmbar an einem Tassenhalter 19, der vorzugsweise mit einem Restebehälter 20 in Verbindung steht. Oberhalb des Restebehälters 20 ist im Gehäuse 14 eine Auswurföffnung 21, ausgebildet auch als Auswurfkanal, unterhalb des Schieberelementes 15 vorgesehen. Ein Handgriff 25 gewährleistet ein Verschieben des Schieberelementes 15 in dargestellter Pfeilrichtung X.

Der Restebehälter 20 ist in einer Einstecköffnung 22 mit daran anschliessendem Tassenhalter 19 des Gehäuses 14 eingeschoben und kann bei Bedarf zur Reinigung und zum Entleeren aus dem Gehäuse 14 entnommen werden.

Ein dem Gehäuse 14 vorzugsweise stirnseitig zugeordnetes Display 23 gewährleistet eine manuelle Ansteuerung zum Bereitstellen von heissem Wasser, insbesondere zum Zuführen von heissem Wasser zur Wasserzufuhr, insbesondere zur Zubereitung von Tee oder Kaffee. Dabei wird entsprechend im Display durch den Bediener ggf. über Tasten oder Touchscreen gewählt, die Wassertemperatur, den Betriebsdruck, die Menge an durchströmendem Wasser, sowie die Strömungsgeschwindigkeit. Diese ist dort exakt einstellbar. Ferner soll daran gedacht sein, dass bspw. dem Wasserbehälter 5 eine hier nicht näher bezeichnete oder bezifferte Wasserstandskontrolle, Füllstandssensor, od. dgl. zugeordnet sein kann, welcher auf mechanischem, oder elektronischem Wege einen Füllstand des Wasserbehälters 5 ermittelt und über die Busleitung 12, über die Steuerung 11 ein Wasserstand, eine Mindestmenge oder eine Restmenge am Display 23 anzeigt oder signalisiert, dass der Wasserbehälter 5 erneut befüllt werden muss.

Die Funktionsweise der vorliegenden Erfindung ist folgende:
Bei der vorliegenden Erfindung wird wie oben beschrieben, das heisse Wasser zirkulierend bereitgestellt, bis eine gewünschte wählbare Wassertemperatur nahe dem Bereich des Mehrwegventils 8 zur Verfügung steht. Dann wird die gewünschte Menge an heissem Wasser der Wasserzufuhr 10, bevorzugt unter hohem Druck zugeführt und durchströmt den in die Aufnahme 16 des Schieberelementes 15 eingesetzten Tabs, beinhaltend Filterelemente Kaffee oder Tee zur Herstellung einer Tasse Tee oder Kaffee. Von der Wasserzufuhr 10 wird oberhalb der Aufnahme 16 das Wasser dem Tabs 17 zugeführt. Unterhalb des Tabs 17 bzw. der Aufnahme 16 wird das fertig zubereitete Lebensmittel, insbesondere der Kaffee oder Tee dann dem Behälter 18 bzw. der Tasse 18 einem Becher oder dgl. zugeführt, welcher auf dem Tassenhalter 19 aufsteht. Ggf. überlaufendes Lebensmittel oder Kaffee wird über den Tassenhalter 19 unmittelbar durch entsprechende Siebe und Öffnungen dem Restebehälter 20 zugeführt.

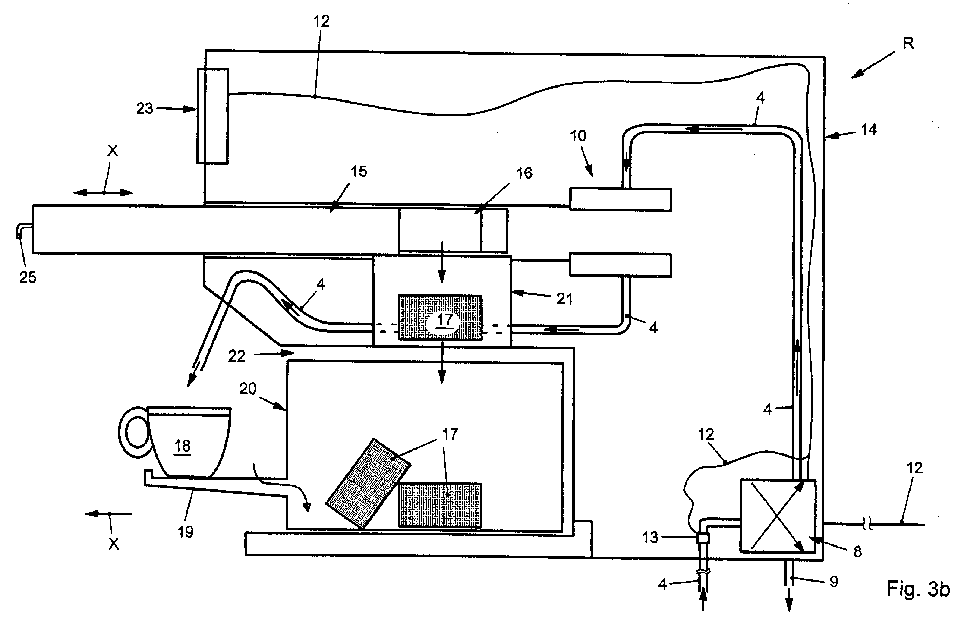

Nach dem Zubereiten von beispielsweise einer Tasse Kaffee oder Tee, wird dann das Schieberelement 15, wie es insbesondere in dem Ausführungsbeispiel gemäss Figur 3b in der weiteren Gebrauchslage aufgezeigt ist, herausgezogen, bis die Aufnahme 16 des Schiebers 15 mit der Auswurföffnung 21 übereinstimmt. In dieser Lage erweitert sich über eine hier nicht dargestellte Mechanik die Aufnahme 16 querschnittlich, so dass das dort eingelegte und eingespannte Tabs 17 durch die Auswurföffnung 21 in den Restebehälter 20 fällt.

Zum Erneuten Bereitstellen bzw. Zubereiten eines weiteren Getränkes wird dann der Schieber, insbesondere dessen Aufnahme 16 soweit aus dem Gehäuse 14 der Vorrichtung R herausgezogen, bis ein weiterer Tabs 17 in die Aufnahme 16 des Schiebers eingelegt werden kann. Es ist auch daran gedacht das Schiebelement 15 vollständig aus dem Gehäuse 14 herauszuziehen, um den Tabs 17 in die Aufnahme 16 einzulegen. Durch erneutes vollständiges Einschieben des Schieberelementes 15 in das Gehäuse 14 der Vorrichtung R, bis Aufnahme 16 bzw. Tabs 17 in der Wasserzufuhr 10 übereinstimmend liegen, lässt sich in dieser Lage ein weiteres Getränk, beispielsweise Tee oder Kaffe zubereiten. Wichtig ist jedoch bei der vorliegenden Erfindung, dass der Wechsel des Tabs 17 sehr schnell erfolgt, wobei gleichzeitig nach der Zubereitung des Kaffees ein Auswurf des Tabs 17 in den Restebehälter 20 gewährleistet wird.

Diese Vorrichtung ist äusserst klein herzustellen, und lässt sich daher sehr einfach in ein Fahrzeug, beispielsweise ein Taxi nachrüsten. Dies soll ebenfalls im Rahmen der vorliegenden Erfindung liegen.

### Positionszahlenliste

| | | | | | |
|---|---|---|---|---|---|
| 1 | Fahrzeug | 34 | | 67 | |
| 2 | Fahrgast-innenraum | 35 | | 68 | |
| 3 | Bereich | 36 | | 69 | |
| 4 | Zuleitung | 37 | | 70 | |
| 5 | Wasserbehälter | 38 | | 71 | |
| 6 | Pumpe | 39 | | 72 | |
| 7 | Heizeinrichtung | 40 | | 73 | |
| 8 | Mehrwegventil | 41 | | 74 | |
| 9 | Rücklaufleitung | 42 | | 75 | |
| 10 | Wasserzufuhr | 43 | | 76 | |
| 11 | Steuerung | 44 | | 77 | |
| 12 | Busleitung | 45 | | 78 | |
| 13 | Temperatursensor | 46 | | 79 | |
| 14 | Gehäuse | 47 | | | |
| 15 | Schiebeelement | 48 | | | |
| 16 | Aufnahme | 49 | | A₁ | Anordnung |
| 17 | Tabs | 50 | | A₂ | Anordnung |
| 18 | Tasse | 51 | | | |
| 19 | Tassenhalter | 52 | | R | Vorrichtung |
| 20 | Restebehälter | 53 | | | |
| 21 | Auswurföffnung | 54 | | | |
| 22 | Einstellöffnung | 55 | | X | Richtung |
| 23 | Display | 56 | | | |
| 24 | Wechselrichter | 57 | | | |
| 25 | Handgriff | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Zubereiten sowie Bereitstellen von flüssigen Lebensmitteln, insbesondere Kaffee, Tee, Suppe oder dergleichen in einem Fahrzeug (1), insbesondere PKW mit einer Vorrichtung (R) in welcher Wasser bereitgestellt wird,
**dadurch gekennzeichnet,**
**dass** die Vorrichtung (R) zum Zubereiten sowie Bereitstellen von flüssigen Lebensmittel im Bereich des Fahrgastraumes (2) angeordnet ist, und über einen externen Wasserbehälter (5) sowie externe Steuerung (11), heisses und erwärmtes Wasser der Vorrichtung (R) zugeführt wird.

2. Verfahren nach Anspruch 1, **dadurch gekennzeichnet, dass** der Wasserbehälter (5), die Steuerung (11), eine Pumpe (6) sowie eine über die Steuerung (11) ansteuerbare Heizeinrichtung (7) ausserhalb eines Fahrgastinnenraumes (2) vorgesehen sind und das heisse Wasser über eine Zulaufleitung (4) der Vorrichtung (R) bereitgestellt wird.

3. Verfahren nach Anspruch 1 oder 2, **dadurch gekennzeichnet, dass** zwischen Wasserbehälter (5) und Vorrichtung (R) zum Zubereiten sowie Bereitstellen von flüssigen Lebensmitteln eine Zulauf- und eine Rücklaufleitung (4, 9) vorgesehen ist, und über einen schaltbaren Kreislauf das Wasser mittels der Heizeinrichtung (7) und ggf. im Wasserbehälter (5) auf Betriebstemperatur für die Zubereitung des flüssigen Lebensmittels, insbesondere des Kaffees, Tees oder der Suppe erwärmt wird.

4. Verfahren nach wenigstens einem der Ansprüche 1 bis 3, **dadurch gekennzeichnet, dass** zum Vorheizen des Wassers auf Betriebstemperatur, dieses innerhalb Zulauf- und Rücklaufleitung (4,9) zirkuliert, und nach Erreichen der wählbaren und einstellbaren Wassertemperatur der Vorrichtung (R) eine wählbare Menge an heissem Wasser zum Zubereiten von flüssigen Lebensmitteln zur Verfügung gestellt wird.

5. Verfahren nach wenigstens einem der Ansprüche 1 bis 4, **dadurch gekennzeichnet, dass** der Wasserbehälter (5), die Steuerung (11), Pumpe (6) und Heizeinrichtung (7) als jeweils voneinander getrennt oder zu einer Einheit zusammengefasste Module vorgesehen sind die ausserhalb des Fahrgastinnenraumes (2) im Fahrzeug (1) insbesondere im Koffer eines Fahrzeuges (1) untergebracht sind, wobei über Zulaufleitung (4), Rücklaufleitung (9) und eine Busleitung (12) eine Versorgung der im Fahrgastinnenraum (2) angeordneten Vorrichtung (R) zum Bereitstellen und Zubereiten von flüssigem Lebensmittel eine Versorgung und/oder Ansteuerung (11) erfolgt.

6. Verfahren nach wenigstens einem der Ansprüche 1 bis 5, **dadurch gekennzeichnet, dass** die Vorrichtung (R) im Fahrgastinnenraum (2), vorzugsweise im Bereich einer Mittelkonsole zwischen Fahrer und Beifahrer vorgesehen wird, und über eine entsprechende Steuerung (11) flüssiges Lebensmittel, wie beispielsweise Kaffee, Tee, Suppen etc. zubereitet wird, wobei die Wassertemperatur, der Volumenstrom je Zeiteinheit, in der Vorrichtung (R), lebensmittelabhängig gewählt, eingestellt und bestimmt wird.

7. Verfahren nach wenigstens einem der Ansprüche 1 bis 6, **dadurch gekennzeichnet, dass** eine Reinigung, des Systems, insbesondere der Zulauf- und Rücklaufleitungen (4,9), durch Zirkulation von heissem Wasser, ggf. pulsiert, erfolgt.

8. Verfahren nach wenigstens einem der Ansprüche 1 bis 7, **dadurch gekennzeichnet, dass** die einzelnen Module, bestehend aus Vorrichtung (R), aus Wasserbehälter (5), aus Steuerung (11), aus Heizeinrichtung (7), jeweils einzeln austauschbar im Fahrgastraum (2), bzw. ausserhalb des Fahrgastinnenraumes (2) angeordnet sind, und über lösbare Steckverbindungen, betreffend Zulauf- und Rücklaufleitung (4, 9) sowie Busleitungen (12) zum Austauschen voneinander trennbar sind.

9. Vorrichtung zum Zubereiten sowie Bereitstellen von flüssigem Lebensmittel, insbesondere Kaffee, Tee, Suppe oder dgl. in einem Fahrzeug (1), insbesondere PKW mittels Wasser, **dadurch gekennzeichnet, dass** eine Bereitstellung des Wassers über einen ausserhalb des Fahrgastinnenraumes (2) angeordneten Wasserbehälters (5) und zumindest eine Zulaufleitung (4) erfolgt.

10. Vorrichtung zum Zubereiten sowie Bereitstellen von flüssigem Lebensmittel, insbesondere Kaffee, Tee, Suppe oder dgl. in einem Fahrzeug (1), insbesondere PKW mittels Wasser, **dadurch gekennzeichnet, dass** in einem Gehäuse (14) der Vorrichtung (R) zur Aufnahme von Kaffee, Tee, Suppen, Tabs (17) oder dgl., ein Schiebeelement (15) mit zumindest einer Aufnahme (16) für Tabs (17) zwischen einer Wasserzufuhr (10) und einer Auswurföffnung (21) und einer Gebrauchslage zum Bestücken einer Aufnahme (16) mit Tabs (17) hin und her bewegbar, insbesondere verschiebbar ist.

11. Vorrichtung nach Anspruch 9 oder 10, **dadurch gekennzeichnet, dass** unterhalb der Auswurföffnung (21) ein Restebehälter (20) geordnet ist, der der Aufnahme (16) von verbrauchten Tabs (17) dient.

12. Vorrichtung nach Anspruch 11, **dadurch gekennzeichnet, dass** der Restebehälter (20) aus einer Einstecköffnung (22) entnehmbar ist.

13. Vorrichtung nach Anspruch 11 oder 12, **dadurch gekennzeichnet, dass** dem Restebehälter (20) ein Tassenhalter (19) zugeordnet ist, wobei ein Überlauf an Lebensmittel vom Tassenhalter (19) in den Restebehälter (20) fliesst.

14. Vorrichtung nach wenigstens einem der Ansprüche 9 bis 13, **dadurch gekennzeichnet, dass** dem Gehäuse (14) ein Mehrwegeventil (8) zugeordnet ist, welches zur Zirkulation zwischen Zulaufleitung (4), Rücklaufleitung (9), Wasserbehälter (5) angesteuert über eine entsprechende Steuerung (11) sowie zur Bereitstellung von Wasser der Wasserzufuhr (10) bzw. Aufnahme (16) schaltbar ist.

15. Vorrichtung nach wenigstens einem der Ansprüche 9 bis 14, **dadurch gekennzeichnet, dass** der Wasserbehälter (5), eine Steuerung (11), eine Pumpe (6) und eine Heizeinrichtung (7) einzeln, oder in Modulen zusammengefasst ausserhalb des Fahrgastinnenraumes (2), innerhalb des Fahrzeuges (1), angeordnet sind und dem Wasserbehälter 5 eine Wasserstandskontrolle, insbesondere Füllstandskontrolle, Füllstandssensor od. dgl. zur Bestimmung und Ermittlung des Füllstandes zugeordnet ist, der über die Steuerung 11 an einem Display 23 anzeigbar ist.

16. Vorrichtung nach Anspruch 15, **dadurch gekennzeichnet, dass** Wasserbehälter (5), Steuerung (11), Heizeinrichtung (7) und Pumpe (6) einzeln oder zu Modulen zusammengefasst in einem Kofferraum eines PKW's angeordnet sind, und über eine Zulaufleitung (4) und über eine Rücklaufleitung (9) der Wasserbehälter (5) mit dem Gehäuse (14) der Vorrichtung (R) verbunden ist, wobei die Steuerung (11) über zumindest eine Busleitung (12) mit einem Display (23) und dem Mehrwegeventil (8) der Vorrichtung (R) in Verbindung stehen.

17. Vorrichtung nach wenigstens einem der Ansprüche 9 bis 16, **dadurch gekennzeichnet, dass** zum Vorheizen des Wassers eine Zirkulation zwischen Mehrwegeventil (8) und Wasserbehälter (5) über Zulaufleitung (4) und Rücklaufleitung (9), dazwischen eingesetzter Pumpe (6) und Heizeinrichtung (7) erfolgt.

18. Vorrichtung nach wenigstens einem der Ansprüche 9 bis 17, **dadurch gekennzeichnet, dass** über entsprechende Schnellverschlusselemente der Wasserbehälter (5) aus dem externen Bereich des Fahrgastinnenraumes (2) wiederlösbar, entnehmbar oder austauschbar eingesetzt ist.

19. Vorrichtung nach wenigstens einem der Ansprüche 9 bis 18, **dadurch gekennzeichnet, dass** die Vorrichtung (R), insbesondere das Gehäuse (14) im Fahrgastinnenraum (2), im Bereich der Konsole zwischen Fahrersitz und Beifahrersitz austauschbar betreffend die Anschlüsse Busleitung (12), Zulauf- und Rücklaufleitung (4,9) angeordnet ist.

20. Vorrichtung nach wenigstens einem der Ansprüche 9 bis 19, **dadurch gekennzeichnet, dass** Zulaufleitung (4) und Rücklaufleitung (9) isoliert eingesetzt sind, wobei Zulaufund Rücklaufleitung (4,9) sowie die Busleitung (12) als einzelnes austauschbares Modul ausgebildet sind.

21. Vorrichtung nach wenigstens einem der Ansprüche 9 bis 20, **dadurch gekennzeichnet, dass** eine Steuerung (11), die Heizeinrichtung (7) und der Wasserbehälter (5) als einzelne oder zu einem Modul zusammengefasste austauschbare Module ausserhalb des Fahrgastinnenraumes (2), insbesondere in einem Kofferraum eines PKW's angeordnet sind.
